# DEMANDE DE BREVET EUROPEEN

(11) **EP 0 892 510 A1**
(43) Date de publication de la demande: **20.01.1999**
(21) Numéro de dépôt: 98401823.4
(22) Date de dépôt: 17.07.1998
(51) Int. Cl.: H04B 10/12

(54) **Liaison à basse tension de transmission d'ordres tout ou rien**

(30) Priorité: 17.07.1997 FR 9709067
(71) Demandeur: GEC ALSTHOM T & D SA, 75116 Paris (FR)
(72) Inventeur: Ebersohl, Gérard, 69350 La Mulatière (FR)
(74) Mandataire: Gosse, Michel

(57) **Abrégé**

La liaison à basse tension pour la transmission d'ordres tout ou rien entre un bâtiment de relayage (BR) et un appareillage (16) de coupure électrique haute ou moyenne tension distant est constituée principalement d'un faisceau de lignes électriques tirées depuis le bâtiment jusqu'à l'appareillage, chaque ligne servant à la transmission d'un ordre tout ou rien sous la forme d'un échelon de tension. Un échelon de tension transmis sur chaque ligne est transformé en bout de ligne à proximité de l'appareillage électrique par une unité de transformation électro-optique (11) associée à cette ligne en un signal optique à deux états, ce signal optique étant ensuite fourni à une unité de transformation opto-électronique en vue de fournir à l'appareillage un signal électrique de commande à deux états. Un moyen est prévu aux bornes de chaque unité de transformation électro-optique pour réduire le niveau d'un pic de tension diaphonique reçu aux bornes de cette unité, par un circuit capacitif formant un diviseur de tension et pour soustraire du pic de tension réduite une certaine tension par l'intermédiaire d'une diode Zener de telle façon que ce pic de tension reçu aux bornes de l'unité de transformation électro-optique ne soit pas détecté par celle-ci.

## Description

L'invention concerne les installations électriques à haute et moyenne tension et plus particulièrement une liaison à basse tension pour la transmission d'ordres tout ou rien entre un bâtiment de relayage et un ou plusieurs appareillages électriques de coupure distants, comme des disjoncteurs à gaz comprimé ou des sectionneurs.

L'ouverture ou déclenchement et la fermeture ou enclenchement d'un tel appareillage de coupure est obtenu en alimentant une des deux bobines de commande associées à l'appareil. Traditionnellement, chaque bobine est alimentée par un signal électrique basse tension produit depuis le bâtiment de relayage par la fermeture d'un contact d'émission d'ordre, par exemple un bouton poussoir de commande locale ou encore un contact d'un relais de protection de distance.

Les ordres tout ou rien sont transmis par une liaison à basse tension constituée principalement d'un faisceau de câbles conducteurs formant autant de lignes électriques tirées entre le bâtiment et l'appareillage, chaque ligne servant à la transmission d'un ordre tout ou rien sous la forme d'un échelon de tension d'environ 250 volts. Une telle liaison est relativement longue, de l'ordre de 100 à 200 mètres. En outre, des signaux indicatifs de l'état de l'appareil électrique (état enclenché ou déclenché notamment) restitués par des contacts auxiliaires du genre décrits dans la demande de brevet français N°9206920, sont remontés par l'intermédiaire de ces lignes électriques pour permettre à l'exploitant de prendre les décisions d'enclenchement ou de déclenchement.

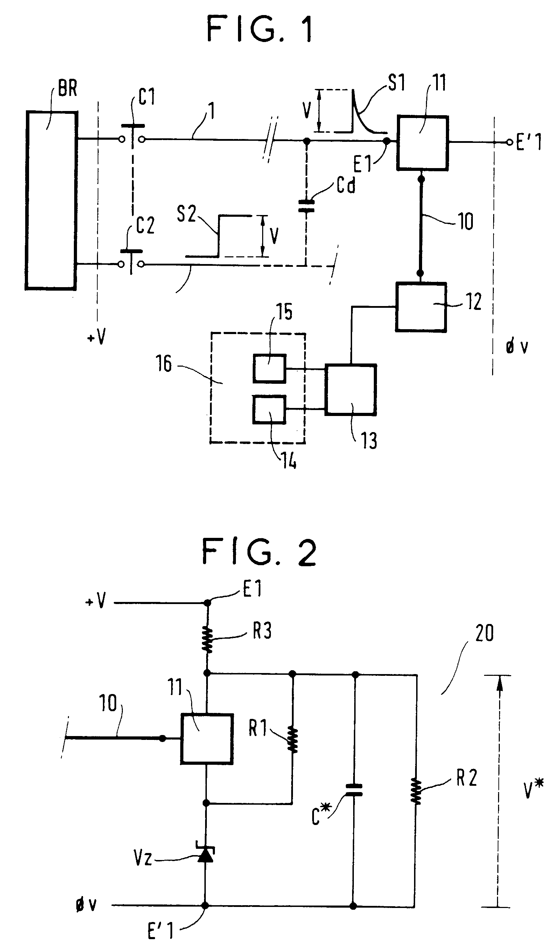

Les contacts auxiliaires sont maintenant conçus autour de circuits électroniques comme décrit dans la demande de brevet français N°9411638 et les relais de commande de bobines sont remplacés par des interrupteurs statiques à base de transistors. Dans ces conditions, il est nécessaire d'isoler ces circuits électroniques des grandes tensions de mode commun susceptibles d'apparaître sur les lignes électriques servant à la transmission des ordres tout ou rien. Pour éviter tout risque de destruction des circuits électroniques, on a donc penser à isoler ces circuits électroniques des lignes électriques proprement dites par un double système de transformation électro-optique. Plus particulièrement, comme visible sur la figure 1, en bout de chaque ligne électrique comme la ligne 1, sont montées en série une unité de transformation électro-optique 11 qui transforme donc un échelon de tension en un signal optique à deux états logique et une unité de transformation opto-électrique 12 reliée à l'unité 11 par une fibre optique 10 qui transforme le signal optique en sortie de l'unité 11 en un signal électrique à deux états apte à être utilisé comme signal de commande par un processeur tel que 13, ce processeur étant relié aux contacts auxiliaires tels que 14 et interrupteurs statiques de commande de bobines tels que 15 de l'appareillage 16. Ces ordres, notamment de commande, doivent être transmis vers l'appareillage, avec un délai aussi faible que possible.

Dans un tel agencement, on a relevé un problème de diaphonie entre les lignes électriques adjacentes de la liaison qui peut induire un dysfonctionnement général de la commande de l'appareil électrique.

Plus particulièrement en se référant à la figure 1, quand le contact C2 proche du bâtiment de relayage BR est fermé, un échelon de tension S2 est transmis sur la ligne 2 et ce signal électrique est reçu par l'unité de transformation électro-optique associée (non représenté) pour être transformé en un signal électrique de commande pour le processeur 13.

Mais, en raison du fait que les câbles de la liaison ne sont pas blindés les uns par rapport aux autres et que cette liaison est relativement longue, la transmission de l'échelon de tension S2 de niveau V sur la ligne 2 induit la transmission d'un pic de tension S1 de niveau V sur la ligne 1 adjacente alors que le contact C1 est resté ouvert. Ce pic de tension S1 décroît (comme illustré sur cette figure) suivant une loi dépendant de la constitution de l'unité 11 raccordée au bout de la ligne 1 (cette loi étant par exemple exponentielle si l'unité 11 est assimilée à une résistance). Il est détecté par l'unité 11, puis transformé en un signal optique pour l'unité 12, ce signal optique d'une durée assez courte étant malgré tout détecté par l'unité 12 en raison de la rapidité et de la sensibilité intrinsèque de cette dernière et finalement transformé en un signal électrique de commande pour le processeur 13. Il en résulte donc qu'un ordre erroné est transmis au processeur 13 ce qui peut être préjudiciable au bon fonctionnement du système.

Le but de l'invention est de remédier à ce dernier inconvénient de façon simple et sans créer de retard dans l'acquisition des ordres tout ou rien au niveau des unités de transformation.

A cet l'effet, l'invention a pour objet une liaison à basse tension pour la transmission d'ordres tout ou rien entre un bâtiment de relayage et un appareillage de coupure électrique haute ou moyenne tension distant, constituée principalement d'un faisceau de lignes électriques tirées depuis le bâtiment jusqu'à l'appareillage distant, chaque ligne servant à la transmission d'un ordre tout ou rien sous la forme d'un échelon de tension, caractérisée en ce que l'échelon de tension transmis sur chaque ligne est transformé en bout de ligne à proximité de l'appareillage électrique par une unité de transformation électro-optique associée à cette ligne en un signal optique à deux états, ce signal optique étant ensuite fourni à une unité de transformation opto-électronique associée à l'unité de transformation électro-optique en vue de fournir à l'appareillage un signal électrique de commande à deux états, et en ce qu'un moyen est prévu aux bornes de chaque unité de transformation électro-optique pour réduire le niveau d'un pic de tension parasite reçu aux bornes de cette unité, par un circuit capacitif formant un diviseur de tension et pour soustraire du pic de tension réduite une certaine tension par l'intermédiaire d'une diode Zener de telle façon que le pic de tension reçu aux bornes de l'unité de transformation électro-optique ne soit pas détecté par celle-ci.

Ainsi, selon l'invention, le signal électrique diaphonique qui apparaît sur une ligne n'est pas supprimé mais c'est simplement son effet qui est éliminé de sorte à ne pas ralentir la transmission des ordres tout ou rien vers le ou les appareils électriques à commander.

Un exemple de réalisation de l'invention est décrit ci-après en détail et illustré sur les figures.

La figure 1 illustre de façon schématique une liaison à basse tension entre un bâtiment de relayage et un appareillage électrique de coupure, comme un disjoncteur.

La figure 2 illustre plus en détail le moyen selon l'invention pour réduire les effets de la diaphonie entre lignes électriques adjacentes d'une telle liaison.

Sur la figure 1, on illustré ce phénomène de diaphonie entre lignes adjacentes de la liaison, telles que les lignes 1 et 2, par une capacité de couplage fictive Cd entre ces lignes, cette capacité Cd étant de l'ordre de 15 nano Farads pour 150 mètres de liaison filaire.

La figure 2 illustre le moyen 20 selon l'invention qui permet de réduire, aux bornes E1,E'1 de l'unité 11 de la ligne 1, le niveau de tension du pic de tension S1 transmis sur cette ligne 1. Ce moyen comprend une capacité C* montée en parallèle aux bornes de l'unité 11, et qui avec la capacité fictive Cd forme un diviseur de tension. Quand un pic de tension de V volts est transmis sur la ligne 1, le niveau V* de tension reçu aux bornes de l'unité 11, qui est donné par la relation suivante : V* = V . (1/C*)/(1/C* + 1/Cd), est réduit dans un rapport de 1 pour 10 environ par le choix de la valeur appropriée de C*.

Par ailleurs, une diode Zener est montée dans le circuit électrique de la capacité C* pour soustraire une certaine tension Vz de la tension réduite V*, cette tension Vz étant développée sous l'effet de la résistance R1 montée en parallèle à l'unité 11. Il en résulte donc que l'unité 11 reçoit à ses bornes un pic de tension d'un niveau extrêmement faible si Vz et C* sont convenablement choisis pour que la différence V*-Vz soit inférieure à un niveau de tension non détectable par l'unité 11.

Quand un échelon de tension tel que S1 est transmis sur la ligne 1 par fermeture du contact C1, l'unité 11 reçoit à ses bornes un signal dont le niveau de tension est égal à V*-Vz. Puisque Vz est bien plus petit que V, cette soustraction de tension n'influence pas le fonctionnement de l'unité 11.

Bien entendu, le moyen 20 selon l'invention pour réduire l'effet de ce phénomène de diaphonie entre lignes adjacentes d'une liaison à basse tension est prévu sur chaque ligne de la liaison.

On notera que dans le cas ou l'unité de transformation 11 n'est pas un circuit linéaire, il est souhaitable que la capacité C* soit déchargée après chaque sollicitation de telle façon à conserver une tension V* conforme à Vz. C'est le rôle de la résistance R2 monté en parallèle aux bornes de la capacité C*.

Par ailleurs, on prévoit aussi une résistance R3, de faible valeur, destinée à limiter le courant de crête dans le contact d'émission d'ordre sur une ligne, dans le cas d'exemple le contact C1, à V/R3. A noter que la constante de temps C*.R3 n'introduit pas de retard appréciable dans l'acquisition des ordres tout ou rien au niveau de l'unité de transformation 11.

Pour obtenir un fonctionnement de l'acquisition des ordres tout ou rien dans une large plage de variation de la tension V, on prévoira avantageusement de constituer chaque unité de transformation 11 avec une source de courant constant dans une large plage de tension utile V*-Vz dépendante de V.

## Revendications

1. Une liaison à basse tension pour la transmission d'ordres tout ou rien entre un bâtiment de relayage (BR) et un appareillage (16) de coupure électrique haute ou moyenne tension distant, constituée principalement d'un faisceau de lignes électriques (1,2) tirées depuis le bâtiment jusqu'à l'appareillage distant, chaque ligne servant À la transmission d'un ordre tout ou rien sous la forme d'un échelon de tension, caractérisée en ce que l'échelon de tension transmis sur chaque ligne est transformé en bout de ligne à proximité de l'appareillage électrique par une unité de transformation électro-optique (11) associée à cette ligne en un signal optique à deux états, ce signal optique étant ensuite fourni à une unité de transformation opto-électronique (12) associée à l'unité de transformation électro-optique en vue de fournir à l'appareillage un signal électrique de commande à deux états, et en ce qu'un moyen (20) est prévu aux bornes de chaque unité de transformation électro-optique pour réduire le niveau d'un pic de tension diaphonique reçu aux bornes de cette unité, par un circuit capacitif formant un diviseur de tension et pour soustraire du pic de tension réduite une certaine tension par l'intermédiaire d'une diode Zener de telle façon que le pic de tension reçu aux bornes de l'unité de transformation électro-optique ne soit pas détecté par celle-ci.

2. La liaison selon la revendication 1, dans laquelle l'unité de transformation électro-optique (11) comprend une source de courant.
